# EUROPEAN PATENT APPLICATION

(11) **EP 3 079 435 A1**
(43) Date of publication of application: **12.10.2016**
(21) Application number: 15305540.5
(22) Date of filing: 10.04.2015
(51) Int. Cl.: H04W 76/02, H04W 84/04

(54) **OPTIMIZING RESOURCES WHILE ENSURING FAIRNESS OF SCHEDULING FOR A USER EQUIPMENT IN DUAL CONNECTIVITY OPERATION WITH BEARER SPLIT OPTION IN A RADIO ACCESS NETWORK**

(71) Applicant: ALCATEL LUCENT, 92100 Boulogne-Billancourt (FR)
(72) Inventor: Godin, Philippe, 91620 Nozay (FR); Palat, Sudeep, Swindon, Wiltshire SN5 7DJ (GB); Worrall, Chandrika, Swindon, Wiltshire SN5 7DJ (GB)
(74) Representative: El Manouni, Josiane

(57) **Abstract**

In an embodiment, there is provided a method for optimizing resources while ensuring fairness of scheduling for a User Equipment UE in dual connectivity operation with bearer split option whereby a bearer is split in packet flows including a packet flow whose packets are scheduled by a Master eNodeB, MeNB, and a packet flow whose packets are scheduled by a Secondary eNodeB, SeNB, said method comprising:
- said MeNB either ensuring said fairness of scheduling, or temporarily delegating to said SeNB to ensure said fairness of scheduling.

## Description

The present invention generally relates to mobile communication networks and systems.

Detailed descriptions of mobile or cellular communication networks and systems can be found in the literature, such as in particular in Technical Specifications published by standardization bodies such as for example 3GPP (3^{rd} Generation Partnership Project).

Small cell enhancements have recently been introduced in such systems, in particular to cope with mobile traffic explosion. Small cell enhancements include in particular a dual connectivity (DC) operation, defined in particular in 3GPP TS 36.300 and 3GPP TS 36.423. The dual connectivity operation is defined as an operation where a User Equipment UE in RRC-Connected state is configured to utilise radio resources provided by two distinct schedulers located in two eNodeBs, eNBs (one acting as a Master eNB, MeNB, and one acting as a Secondary eNB, SeNB) connected with non-ideal backhaul over the X2 interface. The dual connectivity operation thus allows, in particular, to increase the per-user throughput.

The dual connectivity operation further includes a bearer split option, whereby a bearer is split in packet flows including a packet flow whose packets are scheduled by the MeNB and a packet flow whose packets are scheduled by the SeNB. The bearer split option thus allows, in particular, to further increase the per-user throughput.

In general, the scheduler (located in the eNB) receives different packet flows and decides how to schedule these different packet flows, taking into account their priorities, queuing delays, radio conditions...etc. In general, fairness of the scheduling also needs to be ensured, to avoid that a bearer does not get any packet from the scheduler for a too long time. However, ensuring fairness of scheduling can be costly in terms of resources e.g. if a UE is located at cell edge of the serving cell.

There is a need to enhance dual connectivity operation with bearer split option, in particular to optimize resources while ensuring fairness of scheduling.

Embodiments of the present invention in particular address such needs.

These and other objects are achieved, in one aspect, by a method for optimizing resources while ensuring fairness of scheduling for a User Equipment UE in dual connectivity operation with bearer split option whereby a bearer is split in packet flows including a packet flow whose packets are scheduled by a Master eNodeB, MeNB, and a packet flow whose packets are scheduled by a Secondary eNodeB, SeNB, said method comprising:
- said MeNB either ensuring said fairness of scheduling, or temporarily delegating to said SeNB to ensure said fairness of scheduling.

These and other objects are achieved, in one aspect, by a method for optimizing resources while ensuring fairness of scheduling for a User Equipment UE in dual connectivity operation with bearer split option whereby a bearer is split in packet flows including a packet flow whose packets are scheduled by a Master eNodeB MeNB and a packet flow whose packets are scheduled by a Secondary eNodeB, SeNB, said method comprising:
- said SeNB temporarily ensuring said fairness of scheduling, upon delegation from said MeNB to ensure said fairness of scheduling.

These and other objects are achieved, in other aspects, by entities for performing such method(s) and/or individual step(s) of such method, said entities including, in particular, RAN entity, such as eNodeB, eNB, for E-UTRAN.

These and other objects are achieved, in one aspect, by a eNodeB, eNB, configured to:
- act as a Master eNB, MeNB, for a User Equipment UE in dual connectivity operation with bearer split option whereby a bearer is split in packet flows including a packet flow whose packets are scheduled by said MeNB and a packet flow whose packets are scheduled by a eNB acting as a Secondary eNB, SeNB,
- either ensure fairness of scheduling for said UE, or temporarily delegate to said SeNB to ensure said fairness of scheduling.

These and other objects are achieved, in one aspect, by a eNodeB, eNB, configured to:
- act as a Secondary eNB, SeNB, for a User Equipment UE in dual connectivity operation with bearer split option whereby a bearer is split in packet flows including a packet flow whose packets are scheduled by a eNB acting as Master eNB, MeNB, and a packet flow whose packets are scheduled by a eNB acting as a Secondary eNB, SeNB,
- temporarily ensure said fairness of scheduling, upon delegation from said MeNB to ensure said fairness of scheduling.

Some embodiments of apparatus and/or methods in accordance with embodiments of the present invention are now described, by way of example only, and with reference to the accompanying drawings, in which:
- Figure 1 is intended to illustrate, in a simplified way, an example of signaling flow between MeNB and SeNB, according to first embodiments of the present invention,
- Figure 2 is intended to illustrate, in a simplified way, an example of signaling flow between MeNB and SeNB, according to second embodiments of the present invention.

In the following description of embodiments of the invention, the case of 3GPP E-UTRAN (or LTE) will more particularly be considered as an example. However, it should be understood that embodiments of the present invention are not limited to such example, and that embodiments of the present invention may apply to other RANs (or technologies), whether 3GPP or non-3GPP based.

A well known technique in LTE or more broadly in mobile radio communication is the "fair scheduling" where the eNB scheduler (MAC layer) ensures that any UE bearer constantly gets a minimum packet delivery to avoid starvation even if the involved UE is in bad radio condition and such minimum delivery is thus costly (in terms of used radio resources) for the scheduler.

In the context of a UE in Dual Connectivity configuration the split bearer option can be used in which the DC (Dual Connectivity) bearer is split in two flows: one flow where its packets are scheduled by the MeNB together with the bearers of the UEs served by the MeNB itself and one flow where its packets are scheduled by the SeNB together with the bearers of the UEs served by the SeNB itself. The DC bearer is therefore served by the MeNB scheduler and the SeNB scheduler at the same time. The MeNB will try to ensure minimum delivery for fairness to all the bearers it serves therefore for the bearers that it owns (non-DC bearers) and for the DC bearers. Similarly the SeNB will try to ensure minimum delivery for fairness to all the bearers it serves therefore for the bearers that it owns (non-DC bearers) and may be depending on implementation, also for the DC bearers. If the UE is in bad radio condition in one of the two eNBs, it is thus costly and useless for that eNB to ensure the fairness because either the other eNB is in good radio condition and can already ensure fairness at low cost, or even if the other eNB is also in bad radio condition it double the cost to have the two eNBs ensuring fairness whereas one only could do.

A similar concept can also be applied for the uplink when the uplink data is split between the MeNB and SeNB to ensure fairness for the UL data.

The alternate is also possible in that neither the MeNB nor the SeNB may ensure fairness expecting the other might do so thereby starving the bearer.

A solution has been proposed in R3-150440 whereby the two eNBs can exchange throughput history over X2 i.e. SeNB indicates to MeNB last served throughput served for the DC bearer and the MeNB indicates to SeNB last served throughput served for the DC bearer, all this in a bidirectional way. This approach has a number of drawbacks, including:
1/ in order to constantly see what the other node schedules, the pace of the throughput history exchange must be high, it is for example every 50 ms in the solution proposed in R3-150440 which overloads the X2 interface.
2/ the two nodes could take adverse decisions. For example if MeNB sees SeNB last served throughput as good enough for fairness and SeNB sees MeNB last served thoughput as good enough for fairness as well, then both could decide in bad radio condition to stop scheduling and let the other do fairness. Then fairness would no longer be achieved. In other words, there is no central control of decision.

Embodiments of the invention start from the idea that DC split bearer is typically used in non overloaded situation. We thus assumes as prerequisite that the MeNB is the node that shall remain in control of the fairness i.e. either ensure fairness, or can decide to temporarily delegate to the SeNB to ensure fairness for some time.

In some embodiments, for example, if the radio conditions are toggling in the SeNB the MeNB will keep in control of the fairness. Only if radio condition are good enough and stable will the MeNB be able to delegate the fairness to the SeNB by a sending a specific command IE (information element) to the SeNB. MeNB will take its decision based on its own radio condition and resources and radio condition of the UE in SeNB in order to optimize resources.

In some embodiments, the command IE can take any of the following form: a qualitative indication "fairness requested" or a quantitative indication like indicating a "minimum bit rate to ensure" or "minimum inter-packet delay" or a combination of any these.

In some embodiments, the command IE can be sent in an existing X2AP message like the X2AP SeNB Modification Request message, SeNB Addition Request message, or in a dedicated new X2AP message.

In some embodiments, whenever the MeNB decides to take back the handling of fairness, it is able to send an equivalent command to stop the delegation of fairness to SeNB. Again this can take a qualitative form like "no fairness requested" IE, or can take a quantitative form like indicating the previous "minimum bit rate to ensure = 0 b/s" or "minimum inter-packet delay = undefined" (this undefined meaning could be encoded e.g. as a specific value of the delay being signaled).

In some embodiments, SeNB has to also consider this indication in its CAC algorithms and reject the bearer request if it cannot support the bearer (including the "fairness request") or reject the request to ensure fairness while the bearer has already been established.

Because DC split bearer option is essentially targeted at non GBR bearers, this new IE can be seen as newly expressing a form of minimum QoS to be ensured for a best effort bearer.

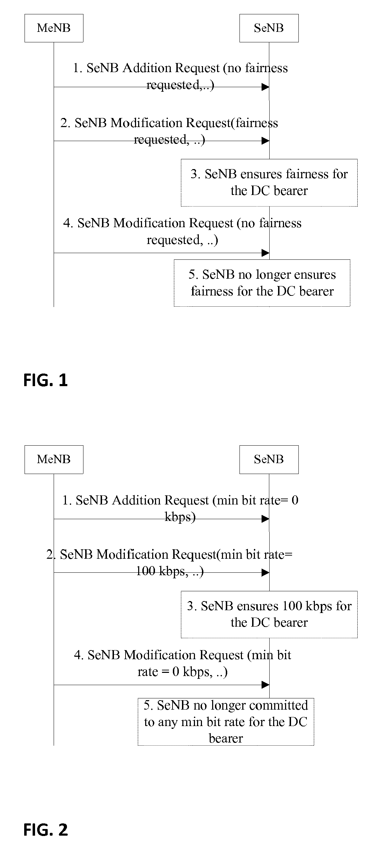

First embodiments may include one or more of following steps, illustrated in figure 1:
- In step 1 the MeNB sets up the SeNB context by sending a SeNB Addition Request indicating "no fairness requested" IE to say that it doesn't request SeNB to ensure fairness (alternatively non inclusion of this new IE can mean by default "no fairness requested)
- In step 2 the MeNB sends a SeNB Modification Request message to the SeNB where it includes the "fairness requested" IE
- In step 3 the MeNB sends a SeNB Modification Request message to the SeNB where it includes the "no fairness requested" IE because MeNB decides to ensure fairness itself again.

Second embodiments may include one or more of following steps, illustrated in figure 2:
- In step 1 the MeNB sets up the SeNB context by sending a SeNB Addition Request indicating "min throughput = 0 kbps" IE to say that it doesn't request the SeNB to ensure any minimum packet delivery (alternatively non inclusion of this new IE can mean by default "no fairness requested),
- In step 2 the MeNB sends a SeNB Modification Request message to the SeNB where it includes the "min throughput = 100 kbps" IE to say that it request the SeNB to ensure at least that bit rate,
- In step 3 the MeNB sends a SeNB Modification Request message to the SeNB where it includes the "min throughput = 0 kbps" IE to say that it doesn't request the SeNB to ensure any minimum packet delivery again (MeNB will ensure fairness itself if needed).

In a broader embodiment, any new IE indicating a QoS for a non GBR bearer that MeNB can request the SeNB as a driver to ensure fairness by SeNB scheduler.

In a broader embodiment, any of the IE indicated above communicated from MeNB to SeNB in any X2AP message (e.g. a new X2AP dedicated message).

Advantages of embodiments of the invention include:
1/ This allows to optimize the resource allocation in the RAN for DC bearers when ensuring fairness.
2/ Also, it guarantees fairness ia always achieved by clear control of one node when in DC configuration which avoids the risk of bearer starvation and therefore visible undesired degradation of the quality of experience for the end user when e.g. applications are run on the mobile based on TCP (TCP very sensitive to bearer starvation e.g. slow start congestion avoidance).
3/ Finally, from another angle, it can also be seen as optimizing the S1 signalling because when MeNB is in bad radio condition for the UE and SeNB is in good radio condition it can transfer fairness control to SeNB as an alternative to performing an handover of the UE to the SeNB.

Advantages of embodiments of the invention over the solution proposed in R3-150440 include:
1/ a few messages over X2 are sufficient to make this solution work in contrast with the solution proposed in R3-150440 which creates X2 signaling overhead
2/ MeNB is at any time in control of which node ensures fairness so there is no risk of no fairness realized due to misunderstanding/ different interpretation between MeNB and SeNB.
3/ it is more future proof in some of its variants: for example when introducing a minimum form of QoS to be met for a non GBR bearer (min QoS today is only for GBR bearer).

In one aspect, there is provided a method for optimizing resources while ensuring fairness of scheduling for a User Equipment UE in dual connectivity operation with bearer split option whereby a bearer is split in packet flows including a packet flow whose packets are scheduled by a Master eNodeB, MeNB, and a packet flow whose packets are scheduled by a Secondary eNodeB, SeNB.

Various embodiments are provided, which may be taken alone or in combination (according to various combinations), including following embodiments.

In an embodiment, said method comprises:
- said MeNB either ensuring said fairness of scheduling, or temporarily delegating to said SeNB to ensure said fairness of scheduling.

In an embodiment, said method comprises:
- said MeNB requesting said SeNB, in a X2AP message such as SeNB Modification Request message or SeNB Addition Request or a dedicated X2AP message, to ensure said fairness of scheduling.

In an embodiment, said method comprises:
- said MeNB detecting if radio conditions enable said SeNB to ensure said fairness of scheduling,
- based on criteria including said detection, said MeNB deciding and requesting said SeNB to ensure said fairness of scheduling.

In an embodiment, said method comprises:
- said MeNB requesting said SeNB, in a X2AP message such as SeNB Modification Request message or a dedicated X2AP message, to stop ensuring said fairness of scheduling.

In an embodiment:
- said request to ensure fairness of scheduling includes at least one of: an indication that said fairness of scheduling is requested to be ensured, a minimum QoS to be ensured, said minimum QoS including at least one of a minimum bit rate to ensure, and a minimum inter-packet delay to ensure.

In an embodiment:
- said request to stop ensuring fairness of scheduling includes at least one of: an indication that said fairness of scheduling is requested to be stopped or not to be ensured, a corresponding value of a minimum QoS to be ensured, said corresponding value including at least one of value 0 of a minimum bit rate to ensure, and an undefined value of a minimum inter-packet delay to ensure (which meaning could still be encoded as a specific value of delay signaled).

In another aspect, there is provided an eNodeB, eNB, configured to:
- act as a Master eNB, MeNB, for a User Equipment UE in dual connectivity operation with bearer split option whereby a bearer is split in packet flows including a packet flow whose packets are scheduled by said MeNB and a packet flow whose packets are scheduled by a eNB acting as a Secondary eNB, SeNB.

Various embodiments are provided, which may be taken alone or in combination (according to various combinations), including following embodiments.

In an embodiment, said eNB is configured to:
- either ensure fairness of scheduling for said UE, or temporarily delegate to said SeNB to ensure said fairness of scheduling.

In an embodiment, said eNB is configured to:
- request said SeNB, in a X2AP message such as SeNB Modification Request message or SeNB Addition Request message or a dedicated X2AP message, to ensure said fairness of scheduling.

In an embodiment, said eNB is configured to:
- detect if radio conditions enable said SeNB to ensure said fairness of scheduling,
- based on criteria including said detection, decide and request said SeNB to ensure said fairness of scheduling.

In an embodiment, said eNB is configured to:
- request said SeNB, in a X2AP message such as SeNB Modification Request message or a new dedicated X2AP message, to stop ensuring said fairness of scheduling.

In an embodiment:
- said request to ensure fairness of scheduling includes at least one of: an indication that said fairness of scheduling is requested to be ensured, a minimum QoS to be ensured, said minimum QoS including at least one of a minimum bit rate to ensure, and a minimum inter-packet delay to ensure.

In an embodiment:
- said request to stop ensuring fairness of scheduling includes at least one of: an indication that said fairness of scheduling is requested to be stopped or not to be ensured, a corresponding value of a minimum QoS to be ensured, said corresponding value including at least one of value 0 of a minimum bit rate to ensure, and an undefined value of a minimum inter-packet delay to ensure (which meaning could be encoded as a specific value of delay signalled) .

In another aspect, there is provided a method for optimizing resources while ensuring fairness of scheduling for a User Equipment UE in dual connectivity operation with bearer split option whereby a bearer is split in packet flows including a packet flow whose packets are scheduled by a Master eNodeB, MeNB, and a packet flow whose packets are scheduled by a Secondary eNodeB, SeNB.

Various embodiments are provided, which may be taken alone or in combination (according to various combinations), including following embodiments.

In an embodiment, said method comprises:
- said SeNB temporarily ensuring said fairness of scheduling, upon delegation from said MeNB to ensure said fairness of scheduling.

In an embodiment, said method comprises:
- said SeNB receiving a request from said MeNB, in a X2AP message such as SeNB Modification Request message or SeNB Addition Request message or a dedicated X2AP message, to ensure said fairness of scheduling.

In an embodiment, said method comprises:
- said SeNB receiving a request from said MeNB, in a X2AP message such as SeNB Modification Request message or a dedicated X2AP message, to stop ensuring said fairness of scheduling.

In an embodiment, said method comprises:
- said SeNB understanding that it is not expected to ensure fairness when it does not receive an explicit fairness ensurance request from said MeNB, either in a X2AP message such as SeNB Addition Request message or in the X2AP message dedicated for fairness delegation.

In an embodiment:
- said request to ensure fairness of scheduling includes at least one of: an indication that said fairness of scheduling is requested to be ensured, a minimum QoS to be ensured, said minimum QoS including at least one of a minimum bit rate to ensure, and a minimum inter-packet delay to ensure.

In an embodiment:
- said request to stop ensuring fairness of scheduling includes at least one of: an indication that said fairness of scheduling is requested to be stopped or not to be ensured, a corresponding value of a minimum QoS to be ensured, said corresponding value including at least one of value 0 of a minimum bit rate to ensure, and an undefined value of a minimum inter-packet delay to ensure (which meaning could be encoded as a specific value of delay signalled).

In an embodiment, said method comprises:
- said SeNB using said request to ensure said fairness of scheduling, to decide if a request for establishment of said bearer should be accepted or rejected or if the said bearer is already established at SeNB to decide whether to release it in SeNB.

In another aspect, there is provided eNodeB, eNB, configured to:
- act as a Secondary eNB, SeNB, for a User Equipment UE in dual connectivity operation with bearer split option whereby a bearer is split in packet flows including a packet flow whose packets are scheduled by a eNB acting as Master eNB, MeNB, and a packet flow whose packets are scheduled by a eNB acting as a Secondary eNB, SeNB.

Various embodiments are provided, which may be taken alone or in combination (according to various combinations), including following embodiments.

In an embodiment, said eNB is configured to:
- temporarily ensure said fairness of scheduling, upon delegation from said MeNB to ensure said fairness of scheduling.

In an embodiment, said eNB is configured to:
- receive a request from said MeNB, in a X2AP message such as SeNB Modification Request message or seNB Addition Request or a dedicated X2AP message, to ensure said fairness of scheduling.

In an embodiment, said eNB is configured to:
- receive a request from said MeNB, in a X2AP message such as SeNB Modification Request message or a dedicated X2AP message, to stop ensuring said fairness of scheduling.

In an embodiment, said eNB is configured to:
- understand that it is not expected to ensure fairness when it does not receive an explicit fairness ensurance request from said MeNB, in a X2AP message such as SeNB Addition Request message or a new message dedicated to trigger delegation of fairness.

In an embodiment:
- said request to ensure fairness of scheduling includes at least one of: an indication that said fairness of scheduling is requested to be ensured, a minimum QoS to be ensured, said minimum QoS including at least one of a minimum bit rate to ensure, and a minimum inter-packet delay to ensure.

In an embodiment:
- said request to stop ensuring fairness of scheduling includes at least one of: an indication that said fairness of scheduling is requested to be stopped or not to be ensured, a corresponding value of a minimum QoS to be ensured, said corresponding value including at least one of value 0 of a minimum bit rate to ensure, and an undefined value of a minimum inter-packet delay to ensure (which meaning could be encoded as a specific value of delay signaled).

In an embodiment, said eNB is configured to:
- use said request to ensure said fairness of scheduling, to decide if a request for establishment of said bearer should be accepted or rejected or if the bearer is already established in SeNB decide to release it in SeNBnb.

In an embodiment, said eNB is configured to:
- decide if said request to ensure said fairness of scheduling should be accepted or rejected.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for optimizing resources while ensuring fairness of scheduling for a User Equipment UE in dual connectivity operation with bearer split option whereby a bearer is split in packet flows including a packet flow whose packets are scheduled by a Master eNodeB, MeNB, and a packet flow whose packets are scheduled by a Secondary eNodeB, SeNB, said method comprising:
- said MeNB either ensuring said fairness of scheduling, or temporarily delegating to said SeNB to ensure said fairness of scheduling.

2. A method according to claim 1, comprising:
- said MeNB requesting said SeNB, in a X2AP message such as SeNB Modification Request message or SeNB Addition Request or a dedicated X2AP message, to ensure said fairness of scheduling.

3. A method according to claim 1 or 2, comprising:
- said MeNB detecting if radio conditions enable said SeNB to ensure said fairness of scheduling,
- based on criteria including said detection, said MeNB deciding and requesting said SeNB to ensure said fairness of scheduling.

4. A method according to any of claims 1 to 3, comprising:
- said MeNB requesting said SeNB, in a X2AP message such as SeNB Modification Request message or a dedicated X2AP message, to stop ensuring said fairness of scheduling.

5. A method according to claim 2 or 3, wherein:
- said request to ensure fairness of scheduling includes at least one of: an indication that said fairness of scheduling is requested to be ensured, a minimum QoS to be ensured, said minimum QoS including at least one of a minimum bit rate to ensure, and a minimum inter-packet delay to ensure.

6. A method according to claim 4, wherein:
- said request to stop ensuring fairness of scheduling includes at least one of: an indication that said fairness of scheduling is requested to be stopped or not to be ensured, a corresponding value of a minimum QoS to be ensured, said corresponding value including at least one of value 0 of a minimum bit rate to ensure, and an undefined value of a minimum inter-packet delay to ensure.

7. A eNodeB, eNB, configured to:
- act as a Master eNB, MeNB, for a User Equipment UE in dual connectivity operation with bearer split option whereby a bearer is split in packet flows including a packet flow whose packets are scheduled by said MeNB and a packet flow whose packets are scheduled by a eNB acting as a Secondary eNB, SeNB,
- either ensure fairness of scheduling for said UE, or temporarily delegate to said SeNB to ensure said fairness of scheduling.

8. A eNB according to claim 7, configured to:
- request said SeNB, in a X2AP message such as SeNB Modification Request message or seNB Addition Request message or a dedicated X2AP message, to ensure said fairness of scheduling.

9. A eNB according to claim 7 or 8, configured to:
- detect if radio conditions enable said SeNB to ensure said fairness of scheduling,
- based on criteria including said detection, decide and request said SeNB to ensure said fairness of scheduling.

10. A eNB according to any of claims 7 to 9, configured to:
- request said SeNB, in a X2AP message such as SeNB Modification Request message or a new dedicated X2AP message, to stop ensuring said fairness of scheduling.

11. A eNB according to claim 8 or 9, wherein:
- said request to ensure fairness of scheduling includes at least one of: an indication that said fairness of scheduling is requested to be ensured, a minimum QoS to be ensured, said minimum QoS including at least one of a minimum bit rate to ensure, and a minimum inter-packet delay to ensure.

12. A eNB according to claim 10, wherein:
- said request to stop ensuring fairness of scheduling includes at least one of: an indication that said fairness of scheduling is requested to be stopped or not to be ensured, a corresponding value of a minimum QoS to be ensured, said corresponding value including at least one of value 0 of a minimum bit rate to ensure, and an undefined value of a minimum inter-packet delay to ensure.

13. A method for optimizing resources while ensuring fairness of scheduling for a User Equipment UE in dual connectivity operation with bearer split option whereby a bearer is split in packet flows including a packet flow whose packets are scheduled by a Master eNodeB MeNB and a packet flow whose packets are scheduled by a Secondary eNodeB, SeNB, said method comprising:
- said SeNB temporarily ensuring said fairness of scheduling, upon delegation from said MeNB to ensure said fairness of scheduling.

14. A method according to claim 13, comprising:
- said SeNB receiving a request from said MeNB, in a X2AP message such as SeNB Modification Request message or seNB Addition Request message or a dedicated X2AP message, to ensure said fairness of scheduling.

15. A method according to claim 13 or 14, comprising:
- said SeNB receiving a request from said MeNB, in a X2AP message such as SeNB Modification Request message or a dedicated X2AP message, to stop ensuring said fairness of scheduling.

16. A method according to any of claims 13 to 15, comprising:
- said SeNB understanding that it is not expected to ensure fairness when it does not receive an explicit fairness ensurance request from said MeNB, either in a X2AP message such as SeNB Addition Request message or in the X2AP message dedicated for fairness delegation.

17. A method according to claim 14 or 16, wherein:
- said request to ensure fairness of scheduling includes at least one of: an indication that said fairness of scheduling is requested to be ensured, a minimum QoS to be ensured, said minimum QoS including at least one of a minimum bit rate to ensure, and a minimum inter-packet delay to ensure.

18. A method according to claim 15, wherein:
- said request to stop ensuring fairness of scheduling includes at least one of: an indication that said fairness of scheduling is requested to be stopped or not to be ensured, a corresponding value of a minimum QoS to be ensured, said corresponding value including at least one of value 0 of a minimum bit rate to ensure, and an undefined value of a minimum inter-packet delay to ensure.

19. A method according to any of claims 13 to 18, comprising:
- said SeNB using said request to ensure said fairness of scheduling, to decide if a request for establishment of said bearer should be accepted or rejected or if the said bearer is already established at SeNB to decide whether to release it in SeNB.

20. A eNodeB, eNB, configured to:
- act as a Secondary eNB, SeNB, for a User Equipment UE in dual connectivity operation with bearer split option whereby a bearer is split in packet flows including a packet flow whose packets are scheduled by a eNB acting as Master eNB, MeNB, and a packet flow whose packets are scheduled by a eNB acting as a Secondary eNB, SeNB,
- temporarily ensure said fairness of scheduling, upon delegation from said MeNB to ensure said fairness of scheduling.

21. A eNB according to claim 20, configured to:
- receive a request from said MeNB, in a X2AP message such as SeNB Modification Request message or seNB Addition Request or a dedicated X2AP message, to ensure said fairness of scheduling.

22. A eNB according to claim 20 or 21, configured to:
- receive a request from said MeNB, in a X2AP message such as SeNB Modification Request message or a dedicated X2AP message, to stop ensuring said fairness of scheduling.

23. A eNB according to any of claims 20 to 22, configured to:
- understand that it is not expected to ensure fairness when it does not receive an explicit fairness ensurance request from said MeNB, in a X2AP message such as SeNB Addition Request message or a new message dedicated to trigger delegation of fairness.

24. A eNB according to claim 21 or 23, wherein:
- said request to ensure fairness of scheduling includes at least one of: an indication that said fairness of scheduling is requested to be ensured, a minimum QoS to be ensured, said minimum QoS including at least one of a minimum bit rate to ensure, and a minimum inter-packet delay to ensure.

25. A eNB according to claim 22, wherein:
- said request to stop ensuring fairness of scheduling includes at least one of: an indication that said fairness of scheduling is requested to be stopped or not to be ensured, a corresponding value of a minimum QoS to be ensured, said corresponding value including at least one of value 0 of a minimum bit rate to ensure, and an undefined value of a minimum inter-packet delay to ensure.

26. A eNB according to any of claims 20 to 25, configured to:
- use said request to ensure said fairness of scheduling, to decide if a request for establishment of said bearer should be accepted or rejected or if the bearer is already established in SeNB decide to release it in SeNBnb.

27. A eNB according to any of claims 20 to 26, configured to:
- decide if said request to ensure said fairness of scheduling should be accepted or rejected.
